## Europäisches Patentamt

## European Patent Office

## Office européen des brevets

(11) Publication number: **0 080 265**
**B1**

(12) **EUROPEAN PATENT SPECIFICATION**

(45) Date of publication of patent specification: **11.12.85**

(51) Int. Cl.⁴: **F 16 D 23/04, F 16 D 23/06**

(21) Application number: **82305514.0**

(22) Date of filing: **18.10.82**

(54) Synchronizer and gear assembly for a power transmission.

(30) Priority: **20.11.81 US 323415**

(43) Date of publication of application:
**01.06.83 Bulletin 83/22**

(45) Publication of the grant of the patent:
**11.12.85 Bulletin 85/50**

(84) Designated Contracting States:
**DE FR GB**

(56) References cited:
**DE-A-2 421 963**
**GB-A-1 102 991**
**GB-A-1 113 413**
**GB-A-1 118 642**
**GB-A-1 125 946**
**GB-A-1 137 332**
**US-A-2 884 106**
**US-A-3 286 801**
**US-A-3 378 122**

(73) Proprietor: **GENERAL MOTORS CORPORATION**
**General Motors Building 3044 West Grand Boulevard**
**Detroit Michigan 48202 (US)**

(72) Inventor: **Chana, Howard Eugene**
**5265 Shrewsbury Drive**
**Troy Michigan 48098 (US)**

(74) Representative: **Breakwell, John Neil Bower et al**
**GM Patent Section Luton Office (F6) P.O. Box No. 3 Kimpton Road**
**Luton Beds. LU2 OSY (GB)**

Courier Press, Leamington Spa, England.

1  0 080 265  2

## Description

This invention relates to a synchronizer and gear assembly as specified in the preamble of claim 1, for example as disclosed in GB—A—1 102 991.

In the development of transmission synchronizers, attempts have been made to increase the synchronizing torque for a given input force, to provide for more efficient shifting of the power transmission. Some prior-art devices, including the subject-matter of the above United Kingdom patent, have utilized a multiplicity of cone surfaces: some at least of such devices tend to result in an increased axial dimension in the synchronizer assembly, or to be otherwise undesirable. Other prior-art devices utilize spring members which wrap down during synchronization to increase the torque capacity.

The present invention is concerned with a development of the conventional single-cone synchronizer arrangement, with the objective of providing increased synchronizing torque, for improved synchronization.

To this end, a synchronizer and gear assembly in accordance with the present invention is characterised by the features specified in the characterising portion of claim 1.

With such an assembly, less axial space is required to provide the improved torque arrangement.

Such a synchronizer and gear assembly, involving diametral contraction of the cone ring and the bearing ring, results in two additional pairs of interengaging friction surfaces. For a given input shift force by the operator, these additional friction surfaces provide an increase in the acceleration or deceleration torque constituting the synchronizing torque for the ratio gear.

The interengaging surfaces of the split bearing ring and of the hub portion preferably comprise cylindrical friction surfaces, which are much easier to machine in high-volume serial production conditions than are conical friction surfaces.

In the drawings:

Figure 1 is a fragmentary longitudinal section of one embodiment of a synchronizer and gear assembly in accordance with the present invention, for use in a motor vehicle;

Figure 2 is a fragmentary cross section on the line 2—2 of Figure 1, in the direction of the arrows; and

Figure 3 is an exploded perspective view of one of a pair of synchronizer assemblies shown in Figure 1, with a shift ring omitted for clarity.

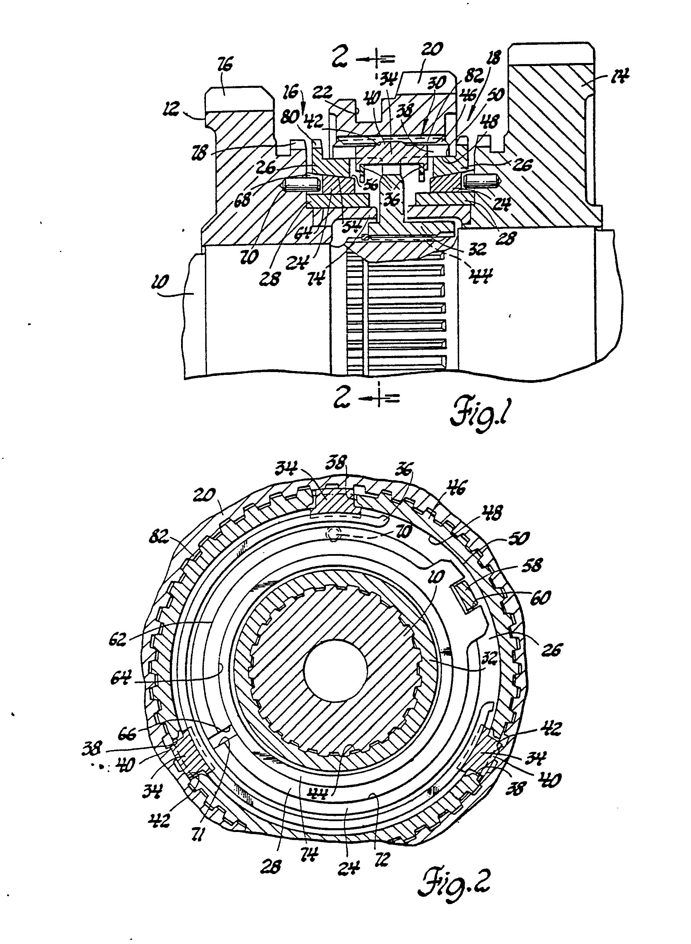

In the drawings, Figure 1 shows a transmission shaft 10 on which are rotatably supported a pair of ratio gears 12 and 14. Disposed between the ratio gears 12 and 14 is a pair of synchronizer assemblies 16 and 18 which are alternatively operable to cause selective speed synchronization between the shaft 10 and the ratio gears 12 and 14 respectively. The synchronizer assemblies 16 and 18 are operated by way of a shift ring 20 which is connected by a yoke groove 22 to be moved in an axial direction by a conventional driver-operable mechanical shift mechanism, not shown.

The synchronizer assembly 16 is shown in exploded perspective view in Figure 3: the synchronizer 18 is substantially identical to the synchronizer 16, such that a detailed description of the synchronizer 16 only should be adequate.

The synchronizer assembly 16 includes a split cone ring 24, a synchronizer ring 26 and a split bearing ring 28. The synchronizer assemblies 16 and 18 have as a common component a hub assembly 30 which includes a hub 32, a plurality of strut keys 34 and a pair of C-shaped retainer springs 36.

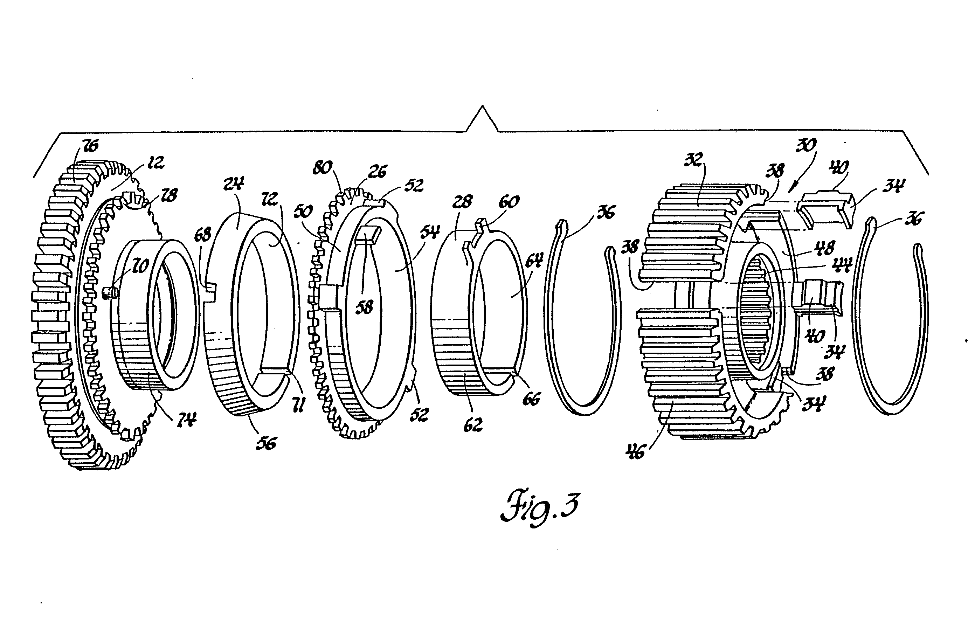

As seen in Figures 1 and 2, the retainer springs 36 are compressed and inserted between the strut keys 34 such that upon release of the compression forces the springs 36 will maintain the strut keys 34 in radially outward portions of respective slots 38 formed in the hub 32. The strut keys 34 each have a raised central surface 40 which engages a corresponding recess 42 in the shift ring 20. The hub 32 has a splined inner diameter 44 which engages a correspondingly splined portion of the shaft 10, a splined outer diameter 46 which engages internal splines of the shift ring 20, and a pair of cylindrical internal surfaces 48 which are radially spaced from respective cylindrical external surfaces 50 formed on the respective synchronizer rings 26.

The synchronizer ring 26 has a plurality of lug-like protuberances 52 which extend radially outwardly from the surface 50 and are engaged in respective slots 38 formed in the hub 32. The inner surface 54 of the synchronizer ring 26 is conical and has an included angle equal to the included angle of a conical surface 56 formed on the split cone ring 24. The synchronizer ring 26 has an axial protuberance constituting a drive tang 58 which engages in a drive slot 60 formed on the outer surface of the split bearing ring 28. The drive tang 58 and drive slot 60 are at a radial position which provides clearance from the internal surface 48 of the hub 32.

The slots 38 and protuberances 52, and the drive tang 58 and drive slot 60, constitute drive connections ensuring that the hub 32, the synchronizer ring 26 and the split bearing ring 28 will always rotate in unison. The split bearing ring 28 has, as well as the drive slot 60, a cylindrical outer surface 62 and a cylindrical inner surface 64, and an axial split 66 diametrically opposite the drive slot 60.

The split cone ring 24 has formed therein a drive slot 68 which receives a drive pin 70 secured to the ratio gear 12. The split cone ring 24 has, as well as the conical outer surface 56, a cylindrical inner surface 72 which co-operates with the cylindrical outer surface 62 of the split bearing ring 28 to provide a rotary bearing support structure, and an axial split 71 diametrically opposite the slot 68. The slot 68 and drive pin 70 form a drive connection ensuring that the split cone ring 24 will rotate in unison with the ratio gear 12.

2

The ratio gear 12 includes a cylindrical hub portion 74 which is disposed in rotary bearing relationship with the cylindrical inner surface 64 of the split bearing ring 28. The ratio gear 12 has a toothed outer diameter 76 adapted to mesh with other gear members (such as layshaft gears) in a well-known manner, and a toothed surface 78 which is coaxial and alignable with a correspondingly toothed surface 80 formed on the outer circumference of the synchronizer ring 26. The toothed surfaces 78 and 80 are engageable by a toothed internal surface 82 formed on the shift ring 20, which surface 82 is slidably engaged with the outer splined diameter 46 of the hub 32.

When it is desired to engage the ratio gear 12 to the shaft 10, the shift ring 20 is moved to the left as viewed in Figure 1 by actuation of a shift lever or like element by the operator. Initially the strut keys 34 abut the radial surface of the synchronizer ring 26, and the detent effect of the surface 40 and the recess 42 results in the synchronizer ring 26 being urged in a leftward direction. Leftward movement of the synchronizer ring 26 results in abutment between the conical surface 54 and the conical surface 56. The axially directed force exerted on the synchronizer ring 26 is thereby transmitted to the split cone ring 24 as a radial and an axial force component: the axial component results in a frictional driving connection between the conical surfaces, and the radial force causes radial contraction of the split cone ring 24. The frictional driving connection between the conical surfaces results in an accelerating torque (synchronizing torque) being transmitted to the split cone ring 24 which is proportional to the input force, the coefficient of friction between the members, and the average radius of the conical contact surfaces. The contraction of the split cone ring 24 produces a frictional drive connection between the split bearing ring 28 and the split cone ring 24. The acceleration torque created at this frictional drive connection between the split bearing ring 28 and the split cone ring 24 is proportional to the coefficient of friction between the interengaging surfaces, and the input force and the outer radius of the split bearing ring.

The radial force also causes contraction of the split bearing ring 28, which upon contraction assumes a frictional drive relationship with the hub portion 74 of the ratio gear 12. The acceleration torque created at this frictional drive connection is proportional to the coefficient of friction between the interengaging surfaces, and the input force and the inner radius of the split bearing ring 28. As long as there is a speed differential between the shift ring 20 and the ratio gear 12, these acceleration torques will continue. Accordingly, in well-known manner, the ratio gear 12 will very rapidly accelerate to the speed of the shaft 10 and the shift ring 20 such that shifting can be completed. When synchronization is essentially complete, the gear teeth constituted by the toothed internal surface 82 of the shift ring 20 pass between the gear teeth constituted by the toothed surface 80 on the outer circumference of the synchronizer ring 26 into mesh with the teeth constituted by the toothed surface 78 of the ratio gear 12, so that a positive drive connection between the transmission shaft 10 and the ratio gear 12 is thereby established.

The ratio gear 14 can be connected to the shaft 10 through the action of the synchronizer assembly 18 by rightward movement of the shift ring 20, and otherwise essentially in the manner described above for the synchronizer assembly 16. Those parts of the synchronizer assembly 18 which correspond to the parts of the synchronizer assembly 16 have been given a like numerical designation, for ease of reference.

Similar considerations would apply in a shift involving deceleration of the ratio gear to the speed of the shaft 10.

From the above description, it will be seen that the single axially directed apply force results in the synchronizer assembly 16 providing three separate frictional torque driving connections between the transmission shaft 10 and the ratio gear 12. Accordingly, acceleration of the ratio gear 12 for the purpose of synchronization will be more rapid for a given input force; alternatively, a lesser axially directed shift force will be sufficient to provide acceleration equal to that found in a conventional synchronizer which has a single frictional torque surface. Therefore, a lighter shift linkage can be utilized if desired, or a smaller mechanical advantage can be utilized between the operator-actuable shift element and the shift ring 20.

## Claims

1. A synchronizer and gear assembly in which a synchronizer ring (26) is effective to develop a synchronizing torque for acceleration or deceleration of a rotary gear member (12), and means (24, 28, 74) is provided for increasing the synchronizing torque at the gear member (12), the assembly comprising: a rotary gear member (12) as aforesaid provided with drive-connecting means (70) and a hub portion (74); a cone ring (24) having an outer conical surface (56), an inner cylindrical surface (72), and drive-connecting means (68) for providing a rotary driving connection to the gear member (12); a synchronizer ring (26) having a conical surface (54) disposed for controlled abutment with the conical surface (56) of the cone ring (24); a bearing ring (28) rotatably journalled on the hub portion (74) and having a rotary driving connection (58, 60) to the synchronizer ring (26), and an outer cylindrical surface (62) defining a support for the cone ring (24); and means (20, 40) for moving the synchronizer ring (26) axially for providing controlled abutment of the conical surfaces (54 and 56), characterized in that the cone ring (24) has an axially extending slot (71) permitting radial contraction of the cone ring (24) when a force is applied to the conical surface (56), and that the bearing ring (28) has an axially extending slot (66) permitting radial contraction of the bearing ring (28) in response to a radial force imposed by contraction of the cone ring (24), with the axial movement of the synchronizer ring moving means (20, 40) resulting in radial contraction of the cone ring (24) and the bearing ring (28), to create synchronizing forces at the interengaging surfaces of the synchronizer ring (26) and of the cone ring (24), at the interengaging surfaces of the cone ring (24) and of the bearing ring (28), and at the interengaging surfaces of the bearing ring (28) and of the hub portion (74), which synchronizing forces act additively to provide an increased synchronizing torque for accelerating or decelerating the gear member (12).

2. A synchronizer and gear assembly according to claim 1, characterized in that the interengaging surfaces of the bearing ring (28) and of the hub portion (74) comprise cylindrical friction surfaces (64 and 74).

3. A synchronizer and gear assembly according to claim 2, characterized in that the gear member (12) is rotatably mounted on a rotary transmission shaft (10), and drive-connecting means (38, 52) is provided to establish a rotary driving connection between the synchronizer ring (26) and a hub portion (32) that is rotatable with the transmission shaft (10).

4. A synchronizer and gear assembly according to any one of claims 1 to 3, characterized in that the rotary driving connections (68 and 70, 58 and 60, 38 and 52) each comprise a slot (68, 60 or 38) and, co-operating therewith, a drive pin (70), tang (58) or lug (52).

5. A synchronizer and gear assembly according to any one of claims 1 to 4, characterized in that operator-controlled shift means (20, 34 etc.) is provided for effecting the said axial movement of the synchronizer ring (26).

**Revendications**

1. Un ensemble synchroniseur et pignon dans lequel un anneau synchroniseur (26) agit pour développer un couple de synchronisation en vue de l'accélération ou du freinage d'un organe d'engrenage rotatif (12), et des moyens (24, 28, 74) sont prévus pour accroître le couple de synchronisation sur l'organe d'engrenage (12), l'ensemble comprenant: un organe d'engrenage rotatif (12) comme indiqué précédemment, muni de moyens de liaison d'entraînement (70) et d'une partie-moyeu (74); un anneau conique (24) ayant une surface conique extérieure (56), une surface cylindrique intérieure (72), et des moyens de liaison d'entraînement (68) pour fournir une liaison d'entraînement rotatif à l'organe d'engrenage (12); un anneau synchroniseur (26) ayant une surface conique (54) disposée en vue d'une mise en butée commandée avec la surface conique (56) de l'anneau conique (24); un anneau d'appui (28) monté rotatif sur la partie-moyeu (74) et présentant une liaison d'entraînement en rotation (58, 60) avec l'anneau synchroniseur (26), et une surface cylindrique extérieure (62) constituant un support pour l'anneau conique (24); et des moyens (20, 40) pour déplacer l'anneau synchroniseur (26) axialement afin d'assurer une mise en butée commandée des surfaces coniques (54 et 56), caractérisé en ce que l'anneau conique (24) comporte une fente s'étendant axialement (71) permettant une contraction radiale de l'anneau conique (24) lorsqu'une force est appliquée à la surface conique (56), et en ce que l'anneau d'appui (28) a une fente s'étendant axialement (66) permettant une contraction radiale de l'anneau d'appui (28) en réponse à une force radiale imposée par une contraction de l'anneau conique (24), le mouvement axial des moyens de déplacement de l'anneau synchroniseur (20, 40) entraînant une contraction radiale de l'anneau conique (24) et de l'anneau d'appui (28), afin de créer des forces de synchronisation au niveau des surfaces coopérant entre elles de l'anneau synchroniseur (26) et de l'anneau conique (24), au niveau des surfaces coopérant entre elles de l'anneau conique (24) et de l'anneau d'appui (28), et au niveau des surfaces coopérant entre elles de l'anneau d'appui (28) et de la partie-moyeu (74), ces forces de synchronisation agissant de manière supplémentaire, afin de fournir un couple accru de synchronisation en vue d'accélérer ou de freiner l'organe d'engrenage (12).

2. Un ensemble synchroniseur et pignon selon la revendication 1, caractérisé en ce que les surfaces coopérant entre elles de l'anneau d'appui (28) et de la partie-moyeu (74) comprennent des surfaces cylindriques de frottement (64 et 74).

3. Un ensemble synchroniseur et pignon selon la revendication 2, caractérisé en ce que l'organe d'engrenage (12) est monté de manière rotative sur un arbre rotatif de transmission (10), et des moyens de liaison d'entraînement (38, 52) sont prévus pour établir une liaison d'entraînement en rotation entre l'anneau synchroniseur (26) et une partie-moyeu (32) qui peut tourner avec l'arbre de transmission (10).

4. Un ensemble synchroniseur et pignon selon l'une des revendications 1 à 3, caractérisé en ce que les liaisons d'entraînement en rotation (68 et 70, 58 et 60, 38 et 52) comprennent chacune une encoche (68, 60 ou 38) et, coopérant avec celle-ci, une cheville d'entraînement (70), une languette (58) ou une patte (52).

5. Un ensemble synchroniseur et pignon selon l'une des revendications 1 à 4, caractérisé en ce que des moyens de commande manoeuvrés par l'opérateur (20, 34, etc.) sont prévus pour effectuer le mouvement axial de l'anneau synchroniseur (26).

**Patentansprüche**

1. Synchronisier- und Zahnradanordnung, bei der ein Synchronisierring (26) zur Entwicklung eines Synchronisier-Drehmomentes zur Beschleunigung oder Abbremsung eines sich drehenden Zahnradgliedes (12) wirksam ist, und Mittel (24, 28, 74) vorgesehen sind zum Erhöhen des Synchronisierdrehmomentes an dem Zahnradglied (12), wobei die Anordnung umfaßt: ein sich drehendes Zahnradglied (12) wie erwähnt, versehen mit Antriebsverbindungsmitteln (70) und einem Nabenabschnitt (74); einen Konusring (24) mit einer äußeren Kegelfläche (56), einer inneren zylindrischen Fläche (72) und Antriebsverbindungsmitteln (78) zur Schaffung einer sich drehenden Antriebsverbindung mit dem Zahnradglied (12); einen Synchronisierring (26) mit einer Kegelfläche (54), angeordnet zur gesteuerten Anlage an der Kegelfläche (56) des Konusringes (24); einen drehbar an dem Nabenabschnitt (74) gelagerten Lagerring (28) mit einer drehbaren Antriebsverbindung (58, 60) mit dem Synchronisierring (26), und mit einer Außen-Zylinderfläche (62), welche eine Abstützung für den Konusring (24) bestimmt; und Mittel (20, 40) zum Bewegen des Synchronisierringes (26) in Axialrichtung zum Schaffen gesteuerter Anlage der Kegelflächen (54 und 56), dadurch gekennzeichnet, daß der Konusring (24) einen sich axial erstreckenden Schlitz (71) besitzt, der eine radiale Kontraktion des Konusringes (24) zuläßt, wenn eine Kraft auf die Kegelfläche (56) ausgeübt wird, und daß der Lagerring (28) einen sich axial erstreckenden Schlitz (66) besitzt, der eine radiale Kontraktion des Lagerringes (28) in Abhängigkeit von einer durch Kontraktion des Kegelringes (24) ausgeübten Radialkraft zuläßt, wobei die Axialbewegung der Synchronisierring-Bewegungsmittel (20, 40) eine radiale Kontraktion des Konusringes (24) und des Lagerringes (28) ergeben zur Schaffung von Synchronisierkräften an den miteinander in Eingriff stehenden Flächen des Synchronisierringes (26) und des Konusringes (24), an den miteinander in Eingriff stehenden Flächen des Konusringes (24) und des Lagerringes (28) und an den miteinander in Eingriff stehenden Flächen des Lagerringes (28) und des Nabenabschnittes (74), welche Synchronisierkräfte zusätzlich zur Schaffung eines erhöhten Synchronisierdrehmomentes zum Beschleunigen oder Abbremsen des Zahnradgliedes (12) wirken.

2. Synchronisier- und Zahnradanordnung nach Anspruch 1, dadurch gekennzeichnet, daß die miteinander in Eingriff stehenden Flächen des Lagerringes (28) und des Nabenabschnittes (24) zylindrische Reibflächen (64 und 74) enthalten.

3. Synchronisier- und Zahnradanordnung nach Anspruch 2, dadurch gekennzeichnet, daß das Zahnradglied (12) drehbar an einer sich drehenden Übertragungswelle (10) angebracht ist und daß Antriebsverbindungsmittel (38, 52) vorgesehen sind zur Errichtung einer sich drehenden Antriebsverbindung zwischen dem Synchronisierring (26) und einem Nabenabschnitt (32), der mit der Übertragungswelle (10) drehbar ist.

4. Synchronisier- und Zahnradanordnung nach einem der Ansprüche 1 bis 3, dadurch gekennzeichnet, daß die sich drehenden Antriebsverbindungen (68 und 70, 58 und 60, 38 und 52) jeweils einen Schlitz (68, 60 oder 38) und in Zusammenwirkung damit einen Antriebsstift (70), eine -zange (58) oder eine -lasche (52) enthalten.

5. Synchronisier- und Zahnradanordnung nach einem der Ansprüche 1 bis 4, dadurch gekennzeichnet, daß durch die Bedienungsperson gesteuerte Verschiebemittel (20, 34 usw.) vorgesehen sind zum Bewirken der axial gerichteten Bewegung des Synchronisierringes (26).

Fig.1

Fig.2

1

Fig.3

0 080 265